# EUROPÄISCHE PATENTSCHRIFT

(11) **EP 1 564 033 B1**
(45) Veröffentlichungstag und Bekanntmachung des Hinweises auf die Patenterteilung: **05.09.2007**
(21) Anmeldenummer: 04450234.2
(22) Anmeldetag: 17.12.2004
(51) Int. Cl.: B60D 1/06

(54) **Kupplungskörper**
Trailer hitch
Attelage pour remorque

(30) Priorität: 13.02.2004 AT 2302004
(43) Veröffentlichungstag der Anmeldung: 17.08.2005
(73) Patentinhaber: Scharmüller, Josef, 4892 Fornach (AT)
(72) Erfinder: Scharmüller, Josef, 4892 Fornach (AT)
(74) Vertreter: Gibler, Ferdinand

(56) Entgegenhaltungen:
- US-A- 2 884 261
- US-A- 4 832 360
- US-A- 5 205 574

## Beschreibung

Die Erfindung betrifft einen Kupplungskörper mit einer ersten Kontaktfläche zum Kontakt mit einer Zugöse, wobei wenigstens eine außerhalb der Symmetrieachse des Kupplungskörpers liegende und die Kontaktfläche durchdringende Schmiereinrichtung vorgesehen ist.

Derartige Kupplungskörper können je nach Ausgestaltung der Zugöse eine unterschiedliche Ausformung aufweisen. Bei einer Ausformung als Kupplungskugel kann der bekannte Kupplungskörper eine zentrale Schmierbohrung und die Zugöse Nuten zur Verteilung der Schmierflüssigkeit aufweisen. Nachteilig dabei ist, dass oftmals eine ungleichförmige Schmierung auftritt.

Aus der US 4 832 360 A ist eine Kupplungskugel zum Kontakt mit einer Zugöse bekannt, wobei die Kupplungskugel eine Mehrzahl an Austrittsöffnungen für ein Schmiermittel aufweist, die mit einem zentralen Schmiermittelkanal verbunden sind.

Die US 5 205 574 A offenbart eine Kupplung mit einer Kupplungskugel, welche eine Mehrzahl an Austrittsöffnungen für ein Schmiermittel aufweist, die mit einem zentralen Schmiermittelkanal verbunden sind.

Die US 2 884 261 A betrifft eine Kupplungsvorrichtung mit einer Kupplungskugel und einer Zugöse, wobei die Zugöse eine außermittige Schmieröffnung aufweist.

Aufgabe der Erfindung ist es, einen Kupplungskörper der eingangs genannten Art anzugeben, bei dem die bekannten Nachteile vermieden werden, der eine hohe Zuverlässigkeit und Sicherheit der Kupplung gewährleistet, der einfach und kostengünstig herstellbar ist, eine hohe Lebensdauer aufweist und über seine Lebensdauer eine zuverlässige Funktion gewährleistet.

Erfindungsgemäß wird dies dadurch erreicht, dass ein Einlageelement in einer Aufnahmevorrichtung der wenigstens einen Schmiereinrichtung angeordnet ist.

Dadurch ergibt sich der Vorteil, dass eine zuverlässige Schmierung in einem von der Symmetrieachse abliegenden Bereich sichergestellt werden kann. Diese Schmierung ist dabei weitgehend unempfindlich gegen Verschmutzung und/oder Verschleiß und stellt daher über die gesamte Lebensdauer des Kupplungskörpers eine zuverlässige Schmierung sicher. Durch das Einlageelement kann eine diskontinuierliche Bereitgestellung des Schmiermittels einfach verwirklicht werden.

Gemäß einer weiteren Ausgestaltung der Erfindung kann vorgesehen sein, dass das Material des Einlageelementes einen Schmierstoff, insbesondere Graphit, umfasst. Dadurch kann eine Überhitzung der Kontaktfläche besonders sicher unterbunden werden. Kommt es aufgrund eines Mangels an Schmierstoff zu einer Überhitzung und zu einem Abrieb des Kupplungskörpers, so wird auch ein Teil des Einlageelementes abgerieben, wodurch der Schmierstoff zwischen die Zugöse und den Kupplungskörper gelangt und eine Schmierung wiederhergestellt ist.

In diesem Zusammenhang kann in weiterer Ausgestaltung der Erfindung vorgesehen sein, dass das Einlageelement ölgetränkt ist. Dadurch kann die Schmierwirkung des Einlageelementes weiter verbessert werden.

In Weiterbildung der Erfindung kann vorgesehen sein, dass er als Kupplungskugel mit einer in der Symmetrieachse der Kupplungskugel liegenden ersten Schmieröffnung ausgebildet ist. Dadurch kann auf der gesamten Kontaktfläche der Kupplungskugel eine gute Schmierung erreicht werden, wodurch ein lokales Verschweißen der Kupplungskugel mit der Zugöse unterbunden werden kann.

Gemäß einer weiteren Ausführungsform der Erfindung kann vorgesehen sein, dass er als Sattelbuchse ausgebildet ist. Dadurch kann auch bei einer beispielsweise ringförmigen Zugöse eine Schmierung der Kontaktfläche bereitgestellt werden. Dabei kann die Sattelbuchse auswechselbar ausgebildet sein, wodurch für unterschiedliche Belastungen einfach und schnell eine geeignete Sattelbuchse bereitgestellt werden kann.

In weiterer Ausgestaltung der Erfindung kann vorgesehen sein, dass die wenigstens eine Schmiereinrichtung zumindest einen Schmierkanal umfasst. Durch den Schmierkanal kann von einer zentralen Schmierung kommendes Schmiermittel über die Schmiereinrichtung verteilt werden, wodurch insbesondere eine Dauerschmierung einfach bereitgestellt werden kann.

Eine Variante der Erfindung kann darin bestehen, dass die erste Schmieröffnung und der Schmierkanal mit einer zentralen Schmierleitung in einem Verzweigungsbereich verbunden sind. Dadurch kann die Schmieröffnung und der Schmierkanal mit lediglich einem Anschluss an ein zentrales Schmiersystem betrieben werden.

In diesem Zusammenhang kann in Weiterführung der Erfindung vorgesehen sein, ass der Verzweigungsbereich im Wesentlichen in der Mitte des Kupplungskörpers, insbesondere in der Mitte der Kupplungskugel, angeordnet ist. Durch die Anordnung in der Mitte des Kupplungskörpers kann eine nur geringe Schwächung der tragenden Querschnitte durch die Schmiereinrichtung erreicht werden. Insbesondere bei einer Kupplungskugel weisen die durch die Kugelmitte gehenden Querschnitte eine besonders große Fläche auf.

Gemäß einer weiteren Ausbildung der Erfindung kann vorgesehen sein, dass der Querschnitt des Schmierkanals kleiner als der Querschnitt der ersten Schmieröffnung ist. Dabei kann einfach sichergestellt werden, dass die durch den Schmierkanal austretende Schmierstoffmenge kleiner als die durch die erste Schmieröffnung austretende Schmierstoffmenge ist, wodurch auch bei einem Abfall der zugeführten Schmierstoffmenge eine gute Schmierung im Bereich der Schmieröffnung sichergestellt ist.

Die Erfindung betrifft weiters eine Kupplung.

Weitere Aufgabe der Erfindung ist es, eine Kupplung anzugeben, bei der die bekannten Nachteile vermieden werden und die eine hohe Zuverlässigkeit und Sicherheit der Kupplung gewährleistet, die einfach und kostengünstig herstellbar ist, eine hohe Lebensdauer aufweist und über ihre Lebensdauer eine zuverlässige Funktion gewährleistet.

Erfindungsgemäß wird dies dadurch erreicht, dass sie einen oben beschriebenen Kupplungskörper umfasst.

Dadurch können die Vorteile der oben beschriebenen Kupplungskugel mit der Kupplung bereitgestellt werden, wodurch insbesondere eine hohe Sicherheit und Zuverlässigkeit der gesamten Kupplung erreicht wird.

In Weiterbildung der Erfindung kann vorgehen sein, dass der Kupplungskörper eine Kupplungskugel ist und dass die Symmetrieachse der Kupplungskugel - in Betriebslage der Kupplung gesehen - gegenüber der Lotrechten in Richtung eines Zugfahrzeuges um einen Winkel geneigt, insbesondere um etwa 20° geneigt, ist. Durch die geneigte Anordnung der Kupplungskugel kann die Schmieröffnung sowohl bei Stützlasten als auch bei Zugbeanspruchung in einem hochbelasteten Bereich angeordnet werden. Dadurch kann die Anzahl und die Dimensionen der Schmiereinrichtungen besonders gering gehalten werden und dennoch eine gute und zuverlässige Schmierung des gesamten Auflagebereichs sichergestellt werden.

Gemäß einer weiteren Ausführungsform der Erfindung kann vorgesehen sein, dass die Kupplungskugel verschwenkbar angeordnet ist und in einer Mehrzahl an Stellungen mit einem unterschiedlichen Winkel fixierbar ist. Dadurch kann die Ausrichtung der Kupplungskugel einfach an unterschiedliche Anwendungen angepasst werden.

Die Erfindung wird unter Bezugnahme auf die beigeschlossenen Zeichnungen, in welchen Ausführungsformen dargestellt sind, näher beschrieben. Dabei zeigt:
Fig. 1 bis 4 eine erste Ausführungsform eines erfindungsgemäßen Kupplungskörpers;
Fig. 5 bis 8 eine zweite Ausführungsform eines erfindungsgemäßen Kupplungskörpers;
Fig. 9 bis 16 weitere Ausführungsformen eines erfindungsgemäßen Kupplungsköpers; und
Fig. 17 eine Ausführungsform einer erfindungsgemäßen Kupplung.

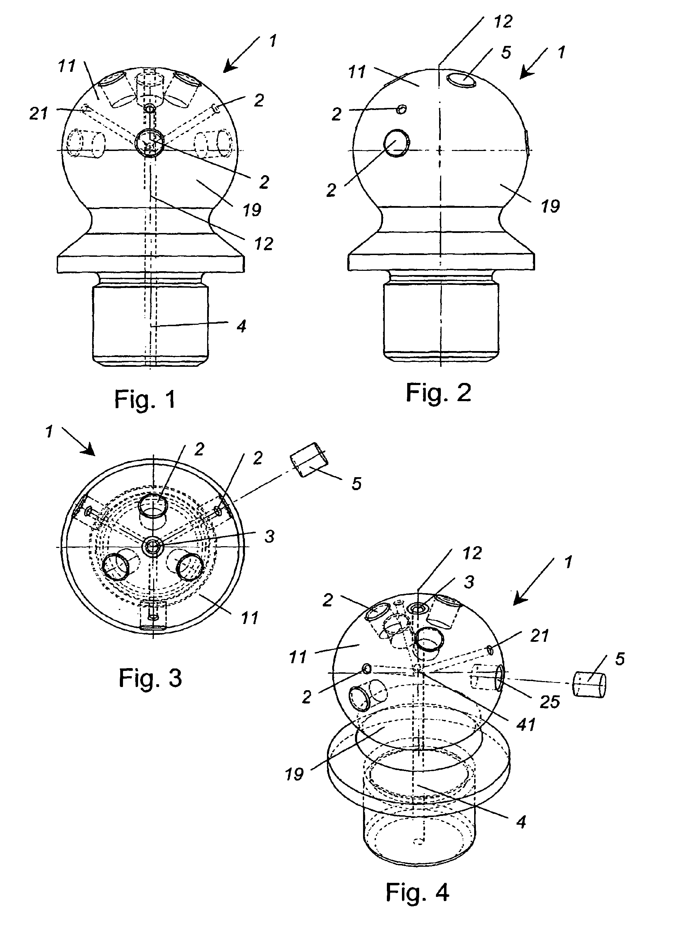

In den Fig. 1 bis 4 ist eine erste Ausführungsform eines erfindungsgemäßen Kupplungskörpers 1 mit einer ersten Kontaktfläche 11 zum Kontakt mit einer Zugöse dargestellt. Bei dem Kupplungskörper 1 sind mehrere außerhalb der Symmetrieachse 12 des Kupplungskörpers 1 liegende und die Kontaktfläche 11 durchdringende Schmiereinrichtungen 2 vorgesehen.

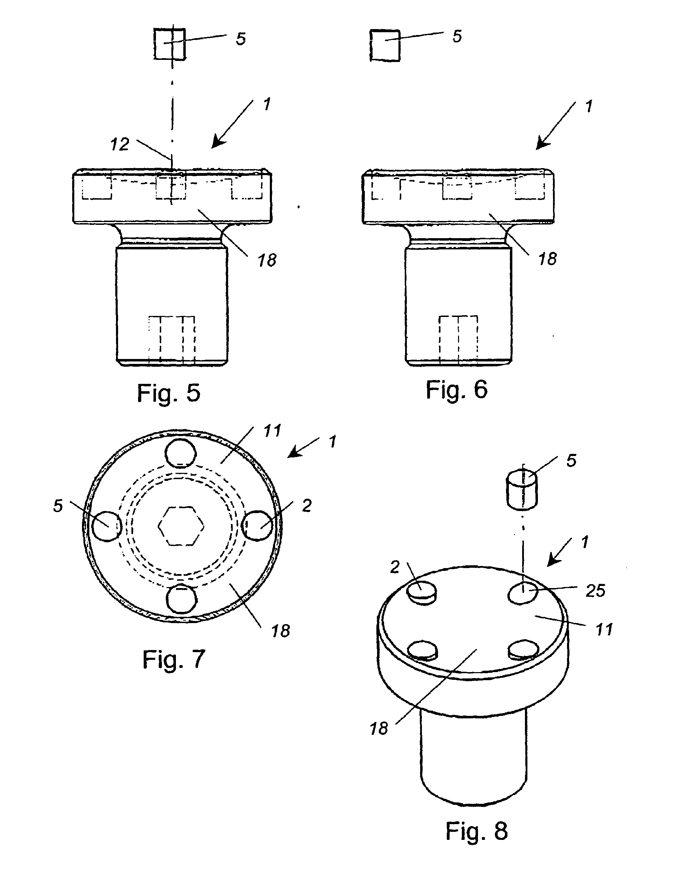

Als erfindungsgemäßer Kupplungskörper 1 können alle Teile einer Kupplung 9 ausgebildet sein, die eine Kontaktfläche 11 zum Kontakt mit einer Zugöse aufweisen. Dabei ist die Zugöse im Betrieb der Kupplung und im eingekuppelten Zustand mit der Kontaktfläche 11 zumindest zeitweise in Kontakt. Die Symmetrieachse 12 ist üblicherweise im Wesentlichen auch eine Symmetrieachse der Kontaktfläche 11. Der Kupplungskörper kann insbesondere als Kupplungskugel 19 oder als Sattelbuchse 18, wie bei der in den Fig. 5 bis 8 dargestellten zweiten Ausführungsform des erfindungsgemäßen Kupplungskörpers, ausgebildet sein.

Die Sattelbuchse 18 kann insbesondere bei Kupplungen mit einem im Wesentlichen U-förmigen Zugmaul und einem beweglichen zentralen Stift verwendet werden, wobei sie im Bereich de zentralen Stiftes angeordnet ist.

Bei Kupplungskugeln 19 ist es üblich, eine in der Symmetrieachse 12 der Kupplungskugel 19 liegende erste Schmieröffnung 3 auszubilden. Durch die erste Schmieröffnung kann ein Schmiermittel in den zentralen Bereich der Kontaktfläche 11 eingebracht werden. Durch das Schmiermittel kann eine übermäßige Erwärmung der Kontaktfläche 11 und ein lokales Verschweißen der Zugöse mit dem Kupplungskörper in diesem Bereich vermieden werden.

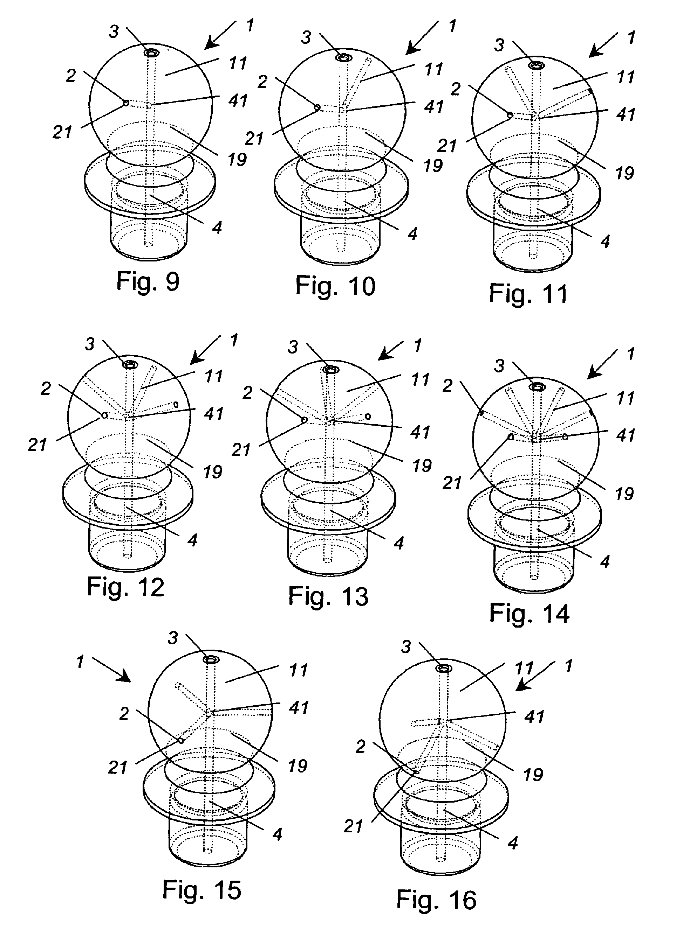

Bei dem erfindungsgemäßen Kupplungskörper 1 ist wenigstens eine außerhalb der Symmetrieachse 12 des Kupplungskörpers 1 liegende und die Kontaktfläche durchdringende Schmiereinrichtung 2 vorgesehen. In den Fig. 9 bis 16 sind unterschiedliche Ausführungsformen des erfindungsgemäßen Kupplungskörpers 1 dargestellt, die jeweils eine unterschiedliche Anzahl Schmiereinrichtungen 2 aufweisen. Die Schmiereinrichtungen 2 können je nach zu erwartender Beanspruchung der Kupplung an verschiedenen Stellen der Kontaktfläche 11 angeordnet sein.

Die Kupplungskugeln 19 gemäß den Fig. 9 bis 14 eignen sich besonders für im wesentlichen positive Stützlasten, die Kupplungskugel 19 gemäß Fig. 15 für neutrale Stützlasten und hohe Zug-Druckbeanspruchung in Fahrtrichtung des Zugfahrzeuges und die Kupplungskugel gemäß Fig. 16 für negative Stützlasten.

Bei den Kupplungskörpern 1 gemäß den Fig. 9 bis 16 umfasst die wenigstens eine Schmiereinrichtung 2 zumindest einen Schmierkanal 21. Der Schmierkanal 21 und die erste Schmieröffnung 3 sind mit einer zentralen Schmierleitung 4 in einem Verzweigungsbereich 41 verbunden. Die Schmierleitung 4 kann in einem Schmiermittelreservoir münden und/oder zum Anschluss an ein zentrales Schmiersystem vorgesehen sein.

Der Verzweigungsbereich 41 kann im Wesentlichen in der Mitte des Kupplungskörpers 1 angeordnet sein. Insbesondere bei der Kupplungskugel 19 kann dadurch eine hohe Belastbarkeit der Kupplungskugel 19 sichergestellt werden.

Es erscheint vorteilhaft zu sein, wenn über die erste Schmieröffnung 3 eine größere Menge Schmierstoff austritt als aus dem Schmierkanal 21. Dies kann auf einfache Weise sichergestellt werden, wenn der Querschnitt des Schmierkanals 21 kleiner als der Querschnitt der ersten Schmieröffnung 3 ist.

Bei der in den Fig. 5 bis 8 gezeigten Ausführungsform des erfindungsgemäßen Kupplungskörpers 1, der als Sattelbuchse 18 ausgebildet ist, umfast die wenigstens eine Schmiereinrichtung 2 eine Aufnahmevorrichtung 25 für ein Einlageelement 5. Weiters sind die Einlageelemente 5 dargestellt, wobei eines der Einlageelemente 5 aus der Aufnahmevorrichtung 25 herausgenommen ist.

Besonders günstig erscheint es, wenn das Material des Einlageelementes 5 einen Schmierstoff umfasst, wobei insbesondere Graphit geeignet erscheint. Dadurch kommt es bei einem Verschleiß des Kupplungskörpers 1 auch zu einem Abrieb des Einlageelementes 5, wodurch Schmierstoff in den Bereich zwischen der Kontaktfläche 11 und der Zugöse gelangt, die Gleiteigenschaften der Zugöse auf der Kontaktfläche 11 verbessert werden und ein weiterer Verschleiß vermieden wird. Weiters kann das Einlageelement im neuen Zustand des Kupplungskörpers 1 aus diesem herausragen und im Betrieb bis auf die Kontur der Kontaktfläche 11 abgetragen werden, wodurch eine besonders gute Schmierung des neuen Kupplungskörpers 1 bereitgestellt werden kann.

Die Schmierwirkung des Einlageelementes 5 kann weiter verbessert werden, wenn es ölgetränkt ist. Dadurch kann insbesondere bei einer Erhöhung der Temperatur und/oder des Druckes eine verbesserte Schmierung sichergestellt werden.

Bei der Ausführung gemäß den Fig. 1 bis 4 umfasst die wenigstens eine Schmiereinrichtung 2 sowohl Schmierkanäle 21 als auch Aufnahmevorrichtungen 25 für das Einlageelement 5.

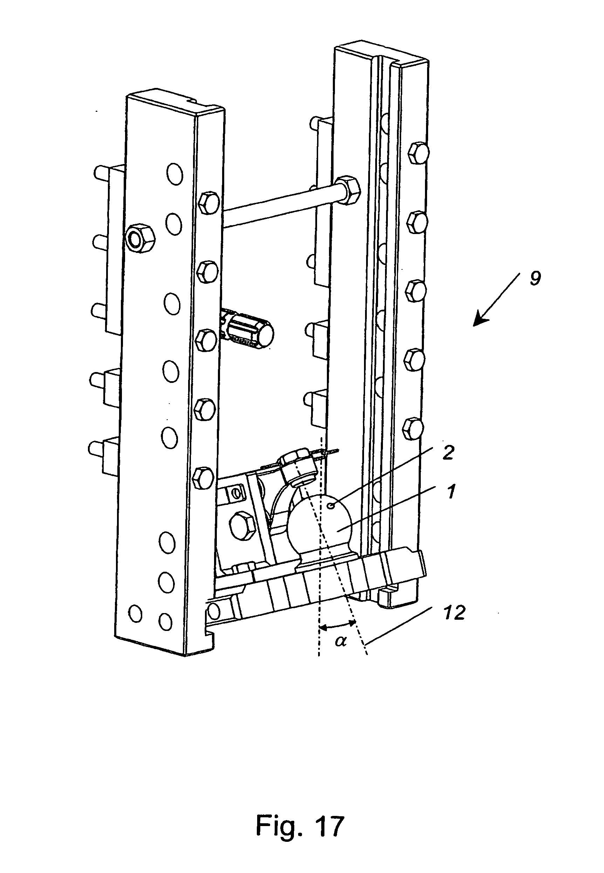

In Fig. 17 ist eine Kupplung 9 mit einem erfindungsgemäßen Kupplungskörper 1 dargestellt.

Bei Verwendung der Kupplungskugel 19 als Kupplungskörper 1 hat sich herausgestellt, dass eine besonders hohe Lebensdauer der Kupplungskugel 19 erreicht werden kann, wenn die Symmetrieachse 12 der Kupplungskugel 19 - in Betriebslage der Kupplung 9 gesehen - gegenüber der Lotrechten in Richtung des Zugfahrzeuges um einen Winkel α geneigt ist. Dabei erscheint insbesondere ein Winkel α von etwa 20° geeignet zu sein.

Es kann auch vorgesehen sein, dass die Kupplungskugel 19 verschwenkbar angeordnet ist und in einer Mehrzahl an Stellungen mit einem unterschiedlichen Winkel α fixierbar ist. Dabei kann insbesondere ein Tragelement, das die Kupplungskugel 19 und einen Niederhalter umfasst verschwenkbar in einer Führung gelagert sein. Dabei kann der Winkel α als Funktion aus Stützlast und Zugkraft gewählt werden, wodurch sichergestellt werden kann, dass die Schmieröffnung 3 im Betrieb in einem Bereich mit besonders hohen Spannungen angeordnet ist.

Die Merkmale der beschriebenen Ausführungsformen können auch miteinander kombiniert und/oder wechselweise ausgetauscht werden.

Bei Ausführungsformen ohne erster Schmieröffnung 3 kann die Aufnahmevorrichtung 25 für das Einlageelement 5 auch in der Symmetrieachse 12 angeordnet sein.

## Patentansprüche

1. Kupplungskörper (1) mit einer ersten Kontaktfläche (11) zum Kontakt mit einer Zugöse, wobei wenigstens eine außerhalb der Symmetrieachse (12) des Kupplungskörpers (1) liegende und die Kontaktfläche (11) durchdringende Schmiereinrichtung (2) vorgesehen ist, **dadurch gekennzeichnet, dass** ein Einlageelement (5) in einer Aufnahmevorrichtung (25) der wenigstens einen Schmiereinrichtung (2) angeordnet ist.

2. Kupplungskörper (1) nach Anspruch 1, **dadurch gekennzeichnet, dass** das Material des Einlageelementes (5) einen Schmierstoff, insbesondere Graphit, umfasst.

3. Kupplungskörper (1) nach Anspruch 1oder 2, **dadurch gekennzeichnet, dass** das Einlageelement (5) ölgetränkt ist.

4. Kupplungskörper (1) nach Anspruch 1, 2 oder 3, **dadurch gekennzeichnet, dass** er als Kupplungskugel (19) mit einer in der Symmetrieachse (12) der Kupplungskugel (19) liegenden ersten Schmieröffnung (3) ausgebildet ist

5. Kupplungskörper (1) nach Anspruch 1, 2 oder 3, **dadurch gekennzeichnet, dass** er als Sattelbuchse (18) ausgebildet ist.

6. Kupplungskörper (1) nach einem der Ansprüche 1 bis 5, **dadurch gekennzeichnet, dass** die wenigstens eine Schmiereinrichtung (2) zumindest einen Schmierkanal (21) umfasst.

7. Kupplungskörper (1) nach Anspruch 6, **dadurch gekennzeichnet, dass** die erste Schmieröffnung (3) und der Schmierkanal (21) mit einer zentralen Schmierleitung (4) in einem Verzweigungsbereich (41) verbunden sind.

8. Kupplungskörper (1) nach Anspruch 7, **dadurch gekennzeichnet, dass** der Verzweigungsbereich (41) im Wesentlichen in der Mitte des Kupplungskörpers (1), insbesondere in der Mitte der Kupplungskugel (19), angeordnet ist.

9. Kupplungskörper (1) nach einem der Anspruche 6 bis 8, **dadurch gekennzeichnet, dass** der Querschnitt des Schmierkanals (21) kleiner als der Querschnitt der ersten Schmieröffnung (3) ist.

10. Kupplung (9), **dadurch gekennzeichnet dass** sie einen Kupplungskörper (1) nach einem der Ansprüche 1 bis 9 umfasst.

11. Kupplung (9) nach Anspruch 10, **dadurch gekennzeichnet, dass** der Kupplungskörpers (1) eine Kupplungskugel (19) ist und dass die Symmetrieachse (12) der Kupplungskugel (19) - in Betriebslage der Kupplung (9) gesehen - gegenüber der Lotrechten in Richtung eines Zugfahrzeuges um einen Winkel (α) geneigt, insbesondere um etwa 20° geneigt, ist.

12. Kupplung (9) nach Anspruch 11, **dadurch gekennzeichnet, dass** die Kupplungskugel (19) verschwenkbar angeordnet ist und in einer Mehrzahl an Stellungen mit einem unterschiedlichen Winkel (α) fixierbar ist.

## Claims

1. A trailer hitch (1), comprising a first contact surface (11) for contact with a drawbar eye, with at least one lubricating device (2) being provided which is situated outside of the axis of symmetry (12) of the trailer hitch (1) and penetrates the contact surface (11), **characterized in that** an insert element (5) is arranged in a receiving apparatus (25) of the at least one lubricating device (2).

2. A trailer hitch (1) according to claim 1, **characterized in that** the material of the insert element (5) comprises a lubricant, especially graphite.

3. A trailer hitch (1) according to claim 1 or 2, **characterized in that** the insert element (5) is saturated with oil.

4. A trailer hitch (1) according to claim 1, 2 or 3, **characterized in that** it is arranged as a hitch ball (19) with a first lubricating opening (3) situated in the axis of symmetry (12) of the hitch ball (19).

5. A trailer hitch (1) according to claim 1, 2 or 3, **characterized in that** it is arranged as a cradle bush (18).

6. A trailer hitch (1) according to one of the claims 1 to 5, **characterized in that** the at least one lubricating device (2) comprises at least one lubricating channel (21).

7. A trailer hitch (1) according to claim 6, **characterized in that** the first lubricating opening (3) and the lubricating channel (21) are connected with a central lubricating line (4) in a branching region (41).

8. A trailer hitch (1) according to claim 7, **characterized in that** the branching region (41) is arranged substantially in the center of the trailer hitch (1), especially in the middle of the hitch ball (19).

9. A trailer hitch (1) according to one of the claims 6 to 8, **characterized in that** the cross section of the lubricating channel (21) is smaller than the cross section of the first lubricating opening (3).

10. A coupling (9), **characterized in that** it comprises a trailer hitch (1) according to one of the claims 1 to 9.

11. A coupling (9) according to claim 10, **characterized in that** the trailer hitch (1) is a hitch ball (19) and that the axis of symmetry (12) of the hitch ball (19) is inclined about an angle (α) relative to the perpendicular in the direction of a tractor when seen in the operating position of the coupling (9), especially inclined about approximately 20°.

12. A coupling (9) according to claim 11, **characterized in that** the hitch ball (19) is arranged in a swivelable manner and can be fixed in a plurality of positions with a different angle (α).

## Revendications

1. Élément d'attelage (1) avec une première surface de contact (11) pour le contact avec un anneau de remorquage, dans lequel est prévu au moins un dispositif de lubrification (2) disposé à l'écart de l'axe de symétrie (12) de l'élément d'attelage (1) et traversant la surface de contact (11), **caractérisé en ce qu'**un élément d'insert (5) est disposé dans un dispositif de réception (25) du dispositif de lubrification (2) au nombre d'un au moins.

2. Élément d'attelage (1) selon la revendication 1, **caractérisé en ce que** le matériau de l'élément d'insert (5) comprend un matériau lubrifiant, en particulier du graphite.

3. Élément d'attelage (1) selon la revendication 1 ou 2, **caractérisé en ce que** l'élément d'insert (5) est imbibé d'huile.

4. Élément d'attelage (1) selon la revendication 1, 2 ou 3, **caractérisé en ce qu'**il est conformé comme une boule d'attelage (19) avec une première ouverture de lubrification (3) coïncidant avec l'axe de symétrie (12) de la boule d'attelage (19).

5. Élément d'attelage (1) selon la revendication 1, 2 ou 3, **caractérisé en ce qu'**il est conformé comme une douille en selle (18).

6. Élément d'attelage (1) selon l'une des revendications 1 à 5, **caractérisé en ce que** le dispositif de lubrification (2) au nombre d'un au moins comprend au moins un canal de lubrification (21).

7. Élément d'attelage (1) selon la revendication 6, **caractérisé en ce que** la première ouverture de lubrification (3) et le canal de lubrification (21) sont reliés avec une conduite de lubrification centrale (4) dans une zone de ramification (41).

8. Élément d'attelage (1) selon la revendication 7, **caractérisé en ce que** la zone de ramification (41) est disposée pour l'essentiel au milieu de l'élément d'attelage (1), en particulier au milieu de la boule d'attelage (19).

9. Élément d'attelage (1) selon l'une des revendications 6 à 8, **caractérisé en ce que** la section du canal de lubrification (21) est plus petite que la section de la première ouverture de lubrification (3).

10. Attelage (9), **caractérisé en ce qu'**il comporte un élément d'attelage (1) selon l'une des revendications 1 à 9.

11. Attelage (9) selon la revendication 10, **caractérisé en ce que** l'élément d'attelage (1) est une boule d'attelage (19) et **en ce que** l'axe de symétrie (12) de la boule d'attelage (19), vu dans la position de service de l'attelage (9), est incliné par rapport à la verticale en direction d'un véhicule tracteur selon un angle (α), en particulier de 20° environ.

12. Attelage (9) selon la revendication 11, **caractérisé en ce que** la boule d'attelage (19) est disposée de manière pivotante et peut être immobilisée dans une pluralité de positions sous un angle (α) différent.
